Europäisches Patentamt

European Patent Office

Office européen des brevets

(19)

(11) Numéro de publication : **0 318 390 B1**

# (12) FASCICULE DE BREVET EUROPEEN

(45) Date de publication du fascicule du brevet :
**05.02.92 Bulletin 92/06**

(51) Int. Cl.⁵ : **G02B 5/10**, G02B 17/06,
F21V 7/08, F24C 15/22

(21) Numéro de dépôt : **88402962.0**

(22) Date de dépôt : **24.11.88**

(54) **Appareil émetteur d'un rayonnement électromagnétique, notamment infrarouge comportant une source plane de rayons et un réflecteur.**

(30) Priorité : **25.11.87 FR 8716361**

(43) Date de publication de la demande :
**31.05.89 Bulletin 89/22**

(45) Mention de la délivrance du brevet :
**05.02.92 Bulletin 92/06**

(84) Etats contractants désignés :
**AT BE CH DE ES FR GB GR IT LI LU NL SE**

(56) Documents cités :
**GB-A- 1 110 073
US-A- 3 449 561
US-A- 3 827 059
US-A- 4 066 887
US-E- 17 038**

(73) Titulaire : **ASSOCIATION POUR LA RECHERCHE ET LE DEVELOPPEMENT DES METHODES ET PROCESSUS INDUSTRIELS (ARMINES)
60, Boulevard Saint-Michel
F-75272 Paris Cédex 06 (FR)**

(72) Inventeur : **Rabi, Ari Center For Energy And Environmental Studies Princeton University
Princeton N.J. 08544 (US)**
Inventeur : **Dehausse, Robert
20 Avenue d'Estienne d'Orves
F-94340 Joinville (FR)**
Inventeur : **Clodic, Denis
44 Rue Emile Lepeu
F-75011 Paris (FR)**

(74) Mandataire : **Bruder, Michel
Cabinet Michel Bruder Conseil en Brevets 10, rue de la Pépinière
F-75008 Paris (FR)**

EP 0 318 390 B1

**Description**

La présente invention concerne un appareil émetteur d'un rayonnement électromagnétique, notamment infrarouge comportant une source plane de rayons et un réflecteur.

Dans un appareil émetteur de rayonnement électromagnétique, notamment infrarouge le réflecteur doit être conformé et monté, par rapport à la source de rayons, de telle façon qu'il n'existe pas de rayons prisonniers entre la source des rayons et le réflecteur. En effet ces rayons prisonniers entraînent une perte de rendement et une surchauffe locale. En outre la forme et la disposition du réflecteur doivent lui permettre d'éliminer les réflexions multiples entre source et réflecteur, qui nuisent naturellement au rendement obtenu avec l'appareil.

On connaît déjà des appareils émetteur de rayonnement et notamment de rayonnement lumineux, ainsi qu'il est décrit dans les brevets US-E-17038, US-A-4066887 et GB-A-1110073. Dans les deux premiers documents la source de rayonnement est, respectivement, circulaire et ponctuelle et elle est associée à un réflecteur qui a généralement la forme d'un paraboloïde. Le brevet GB-A 1110073 concerne un réflecteur pour une source de rayons infrarouges rectiligne, dont la demi section droite comprend deux arcs de parabole reliés entre eux par un arc de cercle centré sur la source des rayons. Les solutions adoptées dans tous ces appareils connus ne permettent nullement d'éviter des problèmes précités lorsque la source du rayonnement est plane.

La présente invention concerne un appareil permettant de satisfaire à ces conditions et d'obtenir un rendement particulièrement élevé, avec une structure remarquablement simple.

A cet effet cet appareil émetteur d'un rayonnement électromagnétique, notamment infrarouge comportant une source plane de rayons et un réflecteur pour réfléchir ces rayons émis en direction d'une cible définie comme s'étendant entre deux extrémités, la source le réflecteur et la cible étant symétriques par rapport à un même plan de symétrie de l'appareil émetteur, si bien que le réflecteur est constitué de deux moitiés de même section droite situées de part et d'autre du plan de symétrie et que la source plane, perpendiculaire au plan de symétrie, comprend des première et seconde extrémités situées de part et d'autre de ce plan, la section droite de chacune desdites moitiés étant située d'un côté du plan de symétrie et ayant la forme d'un arc d'ellipse, caractérisé en ce que les deux foyers dudit arc d'ellipse sont constitués respectivement par la première extrémité de la source plane et la première extrémité de la cible qui sont situées toutes les deux d'un côté du plan de symétrie, cet arc d'ellipse s'étendant entre la seconde extrémité de la source plane située de l'autre côté du plan de symétrie ou un point situé dans le prolongement du segment de droite joignant lesdites première et seconde extrémités de la source plane, à proximité immédiate de cette seconde extrémité et le point d'intersection de l'ellipse avec le rayon direct allant de la première extrémité de la source plane à la seconde extrémité de la cible.

On décrira ci-après, à titre d'exemples non limitatifs, diverses formes d'exécution de la présente invention, en référence au dessin annexé sur lequel :

La figure 1 est un schéma d'un appareil émetteur de rayonnement infrarouge suivant l'invention.

La figure 2 est un schéma d'une variante d'exécution.

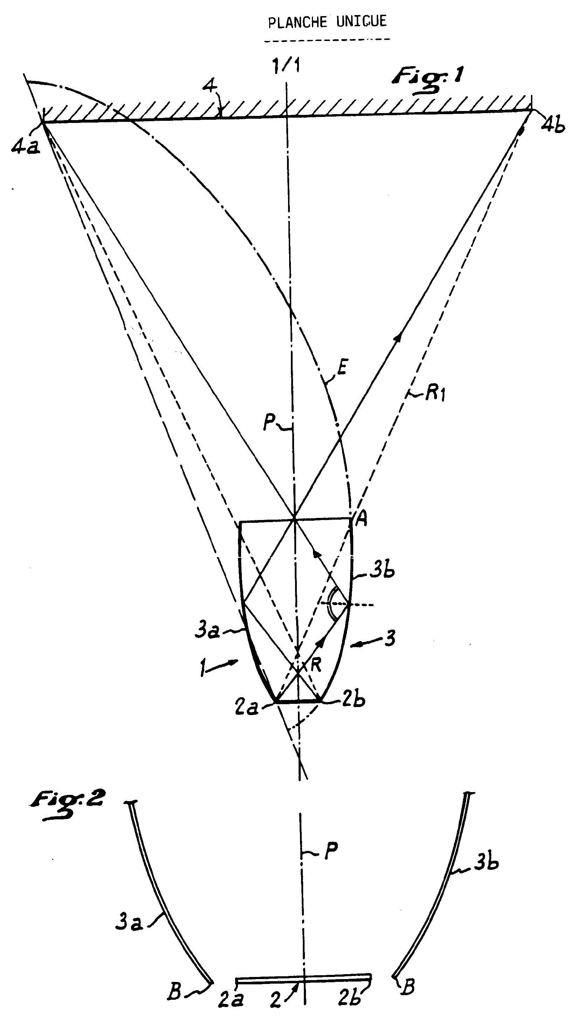

L'appareil émetteur de rayonnement suivant l'invention est désigné dans son ensemble par la référence 1 sur la figure 1. Cet appareil peut émettre n'importe quel type de rayonnement électromagnétique, notamment lumineux ou infrarouge. Dans la suite de la description l'appareil sera toutefois considéré, à titre d'exemple non limitatif, comme émettant un rayonnement infrarouge. Cet appareil comprend une source plane de rayons infrarouges 2, constituant un panneau radiant rectangulaire, qui est perpendiculaire à un plan P qui constitue un plan de symétrie pour l'ensemble de l'appareil 1, ce plan P étant perpendiculaire à la feuille du dessin. La source plane 2 est définie comme s'étendant entre deux extrémités 2a et 2b qui sont symétriques l'une de l'autre par rapport au plan P. L'appareil émetteur de rayonnement infrarouge comporte également un réflecteur 3 qui est destiné à renvoyer les rayons émis par la source 2 sur une cible 4 qui, dans un but de simplification, est considérée comme étant plane sur la figure 1 et s'étendant perpendiculairement au plan de symétrie P de l'appareil émetteur 1. Cette cible 4 s'étend entre deux extrémités 4a, 4b, symétriques l'une de l'autre par rapport au plan P, la première extrémité 4a étant située, par rapport au plan P, du côté de la première extrémité 2a de la source 2 tandis que la seconde extrémité 4b de la cible 4 est située du côté opposé, de même que la seconde extrémité 2b de la source 2.

Le réflecteur 3 est constitué de deux moitiés cylindriques symétriques par rapport au plan P à savoir une moitié gauche 3a et une moitié droite 3b. Chaque demi-réflecteur a une section droite qui est constituée, dans le cas du demi-réflecteur droit 3b, par un arc d'une ellipse E ayant pour foyers les premières extrémités 2a de la source plane 2 et 4a de la cible 4 et passant par la seconde extrémité 2b de la source plane 2. Le demi-réflecteur droit 3b s'étend entre la seconde extrémité 2b de la source plane 2 et un point A situé à l'intersection de l'ellipse E et du rayon direct extrême R1 qui s'étend entre la première extrémité 2a de la source plane et la seconde extrémité 4b de la cible 4.

Grâce à la forme particulière de la section droite de chaque moitié 3a, 3b du réflecteur 3, chaque rayon issu d'un point quelconque de la source plane 2 est réfléchi par le réflecteur 3 en direction de la cible 4 sans qu'il y ait une réflexion multiple de rayons quelconques ni un rayon prisonnier entre la source 2 et le réflecteur 3. On voit par exemple, sur la figure 1, que les rayons R issus de la première extrémité 2a ou extrémité gauche de la source 2 atteignent directement la cible 4 ou bien sont réfléchis par le demi-réflecteur droit 3b, en direction de la première extrémité 4a de la cible 4, sans être interceptés par le demi-réflecteur gauche 3b. Il en est naturellement de même pour tous les rayons issus de la seconde extrémité ou extrémité droite 2b de la source 2, qui atteignent directement la cible 4 ou bien sont réfléchis par le demi-réflecteur gauche 3b en direction de l'extrémité droite de la cible 4.

Dans la variante d'exécution de l'invention représentée sur la figure 2 les deux demi-réflecteurs 3a et 3b ne sont pas reliés directement aux deux extrémités 2a, 2b de la source 2 et ils se terminent en des points B qui sont situés à faible distance des extrémités 2a, 2b de la source 2. On détermine ainsi, entre les extrémités 2a, 2b de la source 2 et les points B, des ouvertures permettant l'entrée de l'air pour assurer le refroidissement interne de l'appareil 1.

L'appareil émetteur de rayonnement suivant l'invention peut être utilisé dans tout le spectre visible et invisible et il peut notamment constituer un projecteur de faisceau lumineux, monté, par exemple, sur un véhicule automobile.

## Revendications

1. Appareil émetteur de rayonnement infrarouge comportant une source plane (2) de rayons infrarouges et un réflecteur (3) pour réfléchir ces rayons infrarouges émis en direction d'une cible (4) définie comme s'étendant entre deux extrémités, (4a, 4b) la source, le réflecteur et la cible étant symétriques par rapport à un même plan de symétrie (P) de l'appareil émetteur, si bien que le réflecteur est constitué de deux moitiés (3a, 3b) de même section droite situées de part et d'autre du plan de symétrie et que la source plane, perpendiculaire au plan de symétrie, comprend des première et seconde extrémités (2a, 2b) situées de part et d'autre de ce plan, la section droite de chacune desdites moitiés (3a, 3b) étant située d'un côté du plan P de symétrie et ayant la forme d'un arc d'ellipse (E), caractérisé en ce que les deux foyers dudit arc d'ellipse sont constitués respectivement par la première extrémité (2a) de la source plane (2) et la première extrémité (4a) de la cible (4) qui sont situées toutes les deux de l'autre côté du plan de symétrie, cet arc d'ellipse (E) s'étendant entre la seconde extrémité (2b) de la source plane (2) située du premier côté du plan de symétrie (P) ou un point (B) situé dans le prolongement du segment de droite (2a-2b) joignant lesdites première et seconde extrémités de la source plane, à proximité immédiate de cette seconde extrémité (2b) et le point d'intersection (A) de l'ellipse (E) avec le rayon direct (R1) allant de la première extrémité (2a) de la source plane à la seconde extrémité (4b) de la cible.

## Patentansprüche

1. Einrichtung zum Abstrahlen von Infrarotstrahlung, mit einer ebenen Infratrotstrahlungsquelle (2) und einem Reflektor (3) zum Reflektieren der emittierten Infrarotstrahlung in Richtung auf ein Ziel (4), welches als sich zwischen zwei Enden (4a, 4b) erstreckend definiert ist, wobei der Reflektor und das Ziel bezüglich ein und derselben Symmetrieebene (P) der Abstrahleinrichtung symmetrisch sind, so daß der Reflektor aus zwei Hälften (3a, 3b) gleichen Querschnitts besteht, die auf entgegengesetzten Seiten der Symmetrieebene liegen und die ebene, zur Symmetrieebene senkrechte Quelle ein erstes und ein zweites Ende (2a, 2b), die beidseits der genannten Ebene liegen, aufweist, und der Querschnitt jeder der genannten Hälften (3a, 3b) auf einer Seite der Symmetrieebene (P) liegt und die Form eines Bogens einer Ellipse (E) hat, **dadurch gekennzeichnet,** daß die beiden Brennpunkte des Ellipsenbogens durch das erste Ende (2a) der ebenen Quelle (2) und das erste Ende (4a) des Ziels (4), die sich beide auf der anderen Seite der Symmetrieebene befinden, gebildet werden und daß sich der Bogen der Ellipse (E) zwischen dem zweiten Ende (2b) der ebenen Quelle (2), das auf der ersten Seite der Symmetrieebene (P) oder einem Punkt (B), der in unmittelbarer Nähe dieses zweiten Endes (2b) auf der Verlängerung des Geradenabschnittes (2a-2b), der das erste und das zweite Ende der ebenen Quelle verbindet, liegt, und dem Schnittpunkt (A) der Ellipse (E) mit dem direkten Strahl (R1), der vom ersten Ende (2a) der ebenen Quelle zum zweiten Ende (4b) des Ziels verläuft, erstreckt.

## Claims

1. Apparatus emitting infrared radiation, comprising a plane source (2) of infrared and a reflector (3) for reflecting these infrared rays emitted in the direction of a target (4) defined as extending between two ends (4a, 4b), the source, the reflector and the target being symmetrical with respect to the same plane of symmetry (P) of the emitter apparatus, so that the reflector is constituted by two halves (3a, 3b) of the same cross section located on either side of the plane of symmetry and that the plane source, perpendicular to the plane of symmetry, comprises first and second ends (2a, 2b) located on either side of this plane, the cross section of each half-reflector (3a, 3b) being located on one side of the plane of symmetry (P), and having the form of an arc of ellipse (E) characterized in that the two foci of said arc of ellipse are constituted respectively by the first end (2a) of the plane source (2) and the first end (4a) of the target (4) which are both located on the other side of the plane of symmetry, this arc of ellipse (E) extending between the second end (2b) of the plane source (2) located on the first side of the plane of symmetry (P) or a point (B) located, in prolongation of the segment of straight line (2a-2b) joining said first and second ends of the plane source, in the immediate proximity of this second end (2b) and the point of intersection (A) of the ellipse (E) with the direct ray (R1) going from the first end (2a) of the plane source to the second end (4b) of the target.

PLANCHE UNIQUE

1/1

*Fig:1*

4

4a

4b

E

P

R1

A

3b

3a

3

1

R

2a    2b

*Fig:2*

P

3b

3a

3a

B

B    2a    2    2b